# EUROPEAN PATENT APPLICATION

(11) **EP 4 650 223 A1**
(43) Date of publication of application: **19.11.2025**
(21) Application number: 24176468.7
(22) Date of filing: 16.05.2024
(51) Int. Cl.: B60Q 1/26, B60Q 1/38, B60Q 1/50, F21S 43/14, F21S 43/237, F21S 43/245, F21S 43/249, F21W 103/00, F21W 103/25

(54) **A LAMP FOR A VEHICLE**

(71) Applicant: Motherson Innovations Deutschland GmbH, 70327 Stuttgart (DE)
(72) Inventor: Trick, Tobias, 71083 Herrenberg (DE); Schmidt, Oliver, 70329 Stuttgart (DE)

(57) **Abstract**

Embodiments of the present disclosure relate a lamp 200 for a vehicle. The lamp 200 has a first LED 204a, second LED 204b, a light tube 206, and control system 202. The first LED 204a and the second LED 204b are configured to emit a first color light and a second color light respectively. Further, the light tube 206 is connected to the first LED 204a and the second LED 204b. Furthermore, the control system 202 is configured to activate at least one of the first LED 204a and the second LED 204b to illuminate the light tube 206.

## Description

The present disclosure relates to a lighting unit for a vehicle.

Lighting or lamping units have been used in vehicle industry from decades now. The lamping units may be placed inside or outside the vehicle. For example, a side turn indicator may be a lamping unit placed outside of the vehicle to indicate the event of side turning. A beacon, placed on a roof of the vehicle, may also be an example of a lamping unit. Similarly, the lamping unit may be placed on an outside-rear view mirror for a three or four wheel vehicle. The lamping unit may be placed on rear view mirror of a two-wheel vehicle. However, with a challenge of limited availability of space for placing lamping units, multi-function lamps have been used in the vehicles.

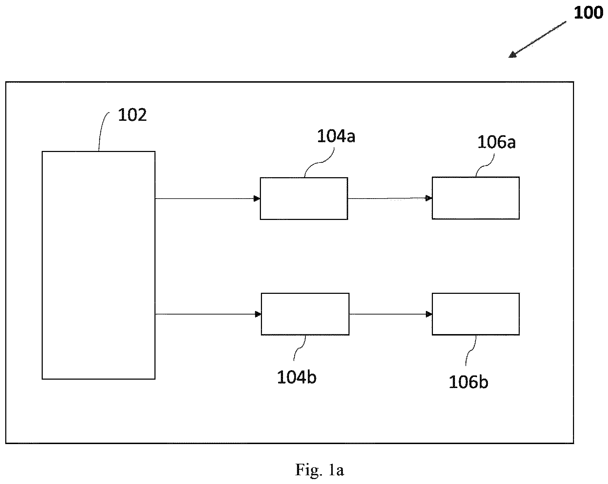

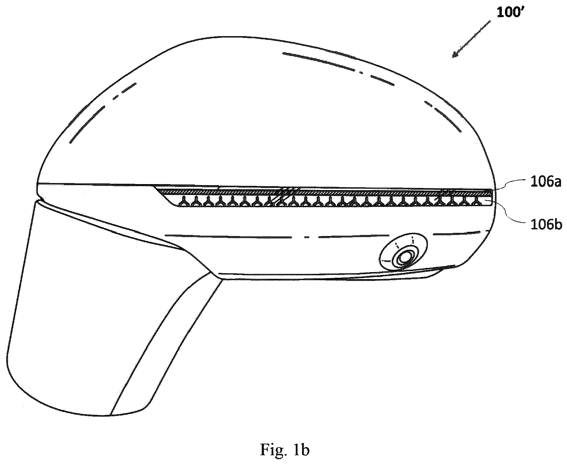

One of the examples of such a multi-function lamp is a combined side turn indicator (STI) and autonomous driving system (ADS) indicator lamp. Such a lamp may be placed on the side of the vehicle or on the outside-rear view mirror. The lamp may also be placed on the roof of the vehicle. The challenge of limited availability of space for placing also kicks in such lamps. Furthermore, a challenge of reducing manufacturing cost for such lamps. Fig. 1a shows a block diagram showing existing lamp 100 having a control system 102, a first LED 104a and a second LED 104b. The first LED 104a may be connected to a first light pipe 106a. Similarly, the second LED 104b may be connected to a second light pipe 106b. However, two light pipes 106a, 106b require larger space within the lamp 100. Further, two light pipes 106a, 106b increases manufacturing cost of the lamp 100. Further, Fig. 1b shows an outside-rear view mirror 100' for a car having a plurality of light pipes 106a, 106b each indicating different function.

Therefore, there is a need to develop such a lamp which solves the challenge of limited space availability for lamp placement. There is also a need to develop a cost-effective lamp.

Hence, it is an object of the present disclosure to provide a lamp which is independent of limited space constraint.

It is yet another object of the present disclosure to provide a cost-effective lamp.

This object is solved by a lamp for a vehicle of claims 1 and 8. Claims 2-7 and 9-13 describe embodiments of the lamp of the vehicle.

Accordingly, an aspect of present disclosure relates to a lamp for a vehicle, the lamp comprising: a first LED configured to emit a first color light; a second LED configured to emit a second color light, wherein the second color light is different from the first color light; a light tube connected to the first LED and the second LED, wherein the light tube is configured to receive light from at least one of the first LED and the second LED; and a control system configured to activate any one of the first LED and the second LED to illuminate the light tube.

Yet another aspect of present disclosure relates to the lamp for the vehicle, wherein the control system activates the first LED in an event of receiving a switching-on input from a side-turn lever of the vehicle.

Yet another aspect of present disclosure relates to the lamp for the vehicle, wherein the control system activates the second LED in an event of receiving a switching-on input from an autonomous driving system of the vehicle.

Yet another aspect of present disclosure relates to the lamp for the vehicle, wherein the control system activates the first LED in an event of receiving a switching-on input from a side-turn lever and an autonomous driving system of the vehicle.

Yet another aspect of present disclosure relates to the lamp for the vehicle, wherein the control system activates the second LED in an event of receiving a switching-on input from a side-turn lever and an autonomous driving system of the vehicle.

Yet another aspect of present disclosure relates to the lamp for the vehicle, wherein the light tube has a first portion and a second portion, wherein the first portion is configured to receive the light from the first LED and the second LED in upstream of the second portion.

Yet another aspect of present disclosure relates to the lamp for the vehicle, wherein the first portion and the second portion have different outcoupling optics.

Yet another aspect of present disclosure relates to a lamp for a vehicle, the lamp comprising: a first LED configured to emit a first color light; a second LED configured to emit a second color light, wherein the second color light is different from the first color light; a light tube connected to the first LED and the second LED, wherein the light tube is configured to receive light from at least one of the first LED and the second LED; and a control system configured to activate both the first LED and the second LED to illuminate the light tube with a third color light.

Yet another aspect of present disclosure relates to the lamp for the vehicle, wherein the third color light is different from the first color light and the second color light.

Yet another aspect of present disclosure relates to the lamp for the vehicle, wherein the control system activates the first LED and the second LED in an event of receiving a switching-on input from a side-turn lever and an autonomous driving system of the vehicle.

Yet another aspect of present disclosure relates to the lamp for the vehicle, wherein the light tube has a first portion and a second portion, wherein the first portion is configured to receive the light from the first LED and the second LED in upstream of second portion.

Yet another aspect of present disclosure relates to the lamp for the vehicle, wherein the first portion and the second portion have different outcoupling optics.

The disclosure also provides an outside-rear view mirror of a vehicle comprising the lamp according to the present disclosure.

Other aspects, advantages, and salient features of the present disclosure will become apparent to those skilled in the art from the following detailed description, which taken in conjunction with the annexed drawings, discloses exemplary embodiments of the disclosure, wherein:
Fig. 1a shows a block diagram of an existing lamp system for a vehicle.
Fig. 1b shows an outside-rear view mirror for an existing lamp system for a vehicle.
Fig. 2 shows a block diagram of a lamp for a vehicle in accordance to an embodiment of a present disclosure.
Fig. 3a shows a first LED and a second LED connected to a light tube in accordance to an embodiment of a present disclosure.
Fig. 3b shows an enlarged view of a portion of the Fig. 3a in accordance to an embodiment of a present disclosure.
Fig. 4 shows a light tube with two different outcoupling optics in accordance to an embodiment of a present disclosure.
Fig. 5a shows a sectional view of outside-rear view mirror for a vehicle having a first LED and a second LED connected to a light tube in accordance to an embodiment of a present disclosure.
Fig. 5b shows an enlarged view of a portion of the Fig. 5a in accordance to an embodiment of a present disclosure.
Fig. 5c shows an enlarged view of a portion of the Fig. 5a in accordance to an embodiment of a present disclosure.
Fig. 6a shows a left-hand side outside-rear view mirror for a vehicle having a light tube in accordance to an embodiment of a present disclosure.
Fig. 6b shows a right-hand side outside-rear view mirror for a vehicle having a light tube in accordance to an embodiment of a present disclosure.

As used herein below, the term "vehicle" refers to any motor or battery driven automobile, wherein the automobile has multi-wheels, e.g. a bike, an autorickshaw, a car, a bus, and a truck. Further, the vehicle may be a fully or partially autonomous automobile.

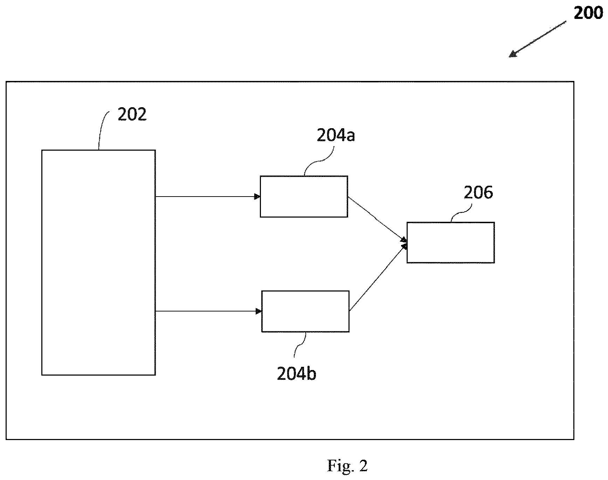

As shown in Fig. 2, the lamp 200 comprises a control system 202, a first LED 204a, a second LED 204b and a light tube 206.

The control system 202 may be a conventionally known PCB configured to control the working of the first LED 204a and second LED 204b based inputs received from an ECU of the vehicle. In another embodiment, the control system 202 may be a conventionally known PCB configured to control the working of the first LED 204a and second LED 204b based inputs received autonomous driving system (ADS) and side-turn lever. As shown in Fig. 2, the control system 202 may be connected to the first LED 204a and the second LED 204b. Further, the control system 202 may be configured to activate at least one of the first LED 204a and the second LED 204b. In one embodiment, the control system 202 may activate the first LED 204a. In another embodiment, the control system 202 may activate the second LED 204b. In yet another embodiment, the control system 202 may activate the first LED 204a and the second LED 204b.

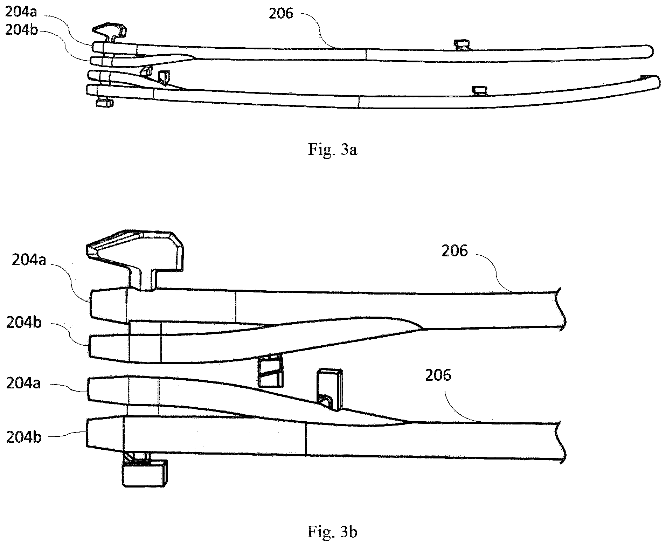

The first LED 204a and the second LED 204b may be conventionally available LEDs known to a person skilled in the art. The first LED 204a, on activation, may be configured to emit a first color light. The second LED 204b, on activation, may be configured to emit a second color light such that the second color light is different from the first color light. Further, as shown in Fig. 2, Fig. 3a and Fig. 3b, the first LED 204a and the second LED 204b may be in-coupled into the light tube 206.

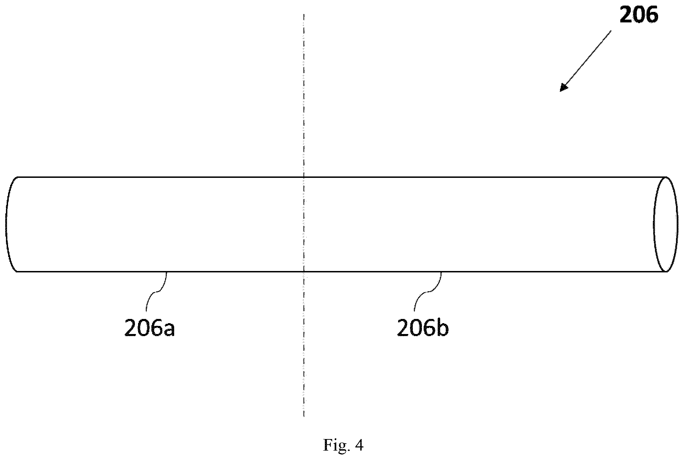

The light tube 206 may be a conventionally known light tube known to a person skilled in the art. As shown in Fig. 2, the light tube 206 may be configured to receive light from at least one of the first LED 204a and the second LED 204b. The light tube 206 may be, but not limited to, rectangularly shaped and cylindrically shaped. Further, the light tube 206 may be straight or bent in shape. The light tube 206 may be configured to illuminate based the light emitted by the first LED 204a and the second LED 204b. Further, the light tube 206 may have a variation in cross-sectional area along the length. Further, in an embodiment, the light tube 206 may have single outcoupling optics. However, in another embodiment as shown in Fig. 4, the light tube 206 may have a first portion 206a and a second portion 206b. The first portion 206a may lie towards the first LED 202a and the second LED 202b whereas the second portion 206b may lie away from the first LED 202a and the second LED 202b. This may cause light from the first LED 202a and second LED 202b to enter the first portion 206a before the second portion 206b. Furthermore, the first portion 206a and the second portion 206b may have different outcoupling optics resulting into appearance of two-different luminous intensity from vicinity. In an embodiment, the first portion 206a may appear brighter than the second portion 206b from the vicinity. However, in another embodiment, the first portion 206a may appear less brighter than the second portion 206b from the vicinity. In another embodiment, the light tube 206 may be made up of two-different materials to achieve two-different portions (206a, 206b) along the length.

In an embodiment, the light tube 206 illuminates with the first color in an event the first color is emitted by the first LED 204a. In another embodiment, the light tube 206 illuminates with the second color in an event the second color is emitted by the second LED 204b. In yet another embodiment, the light tube 206 illuminates with a third color in event the first color is emitted by the first LED 204a and the second color is emitted by the second LED 204b, wherein the third color is formed by combination of the first color and the second color.

Scenario 1: In an event of receiving a switching-on input from a side-turn lever of the vehicle, the control system 202 activates the first LED 202a to illuminate the light tube 206 by the first color to indicate the side-turning of the vehicle. In an event of receiving a switching-on input from an autonomous driving system of the vehicle, the control system 202 activates the second LED 204b to illuminate the light tube 206 by the second color to indicate the autonomous driving mode of the vehicle.

Scenario 2: In an event of receiving a switching-on input from a side-turn lever and an autonomous driving system of the vehicle, the control system 202 activates the first LED 204a to illuminate the light tube 206 by the first color to indicate the side-turning of the vehicle.

Scenario 3: In an event of receiving a switching-on input from a side-turn lever and an autonomous driving system of the vehicle, the control system 202 activates the second LED 204b to illuminate the light tube 206 by the second color to indicate the autonomous driving mode of the vehicle.

Scenario 4: In an event of receiving a switching-on input from a side-turn lever and an autonomous driving system of the vehicle, the control system 202 activates the first LED 204a and the second LED 204b to illuminate the light tube 206 by the third color to indicate the side-turning and autonomous driving mode of the vehicle, wherein the third color is combination of the first color and the second color.

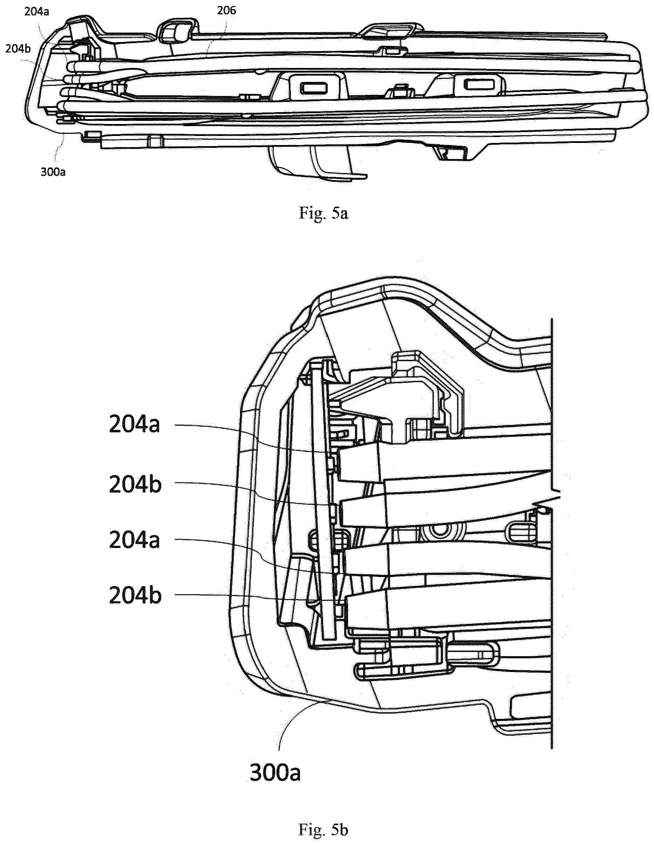

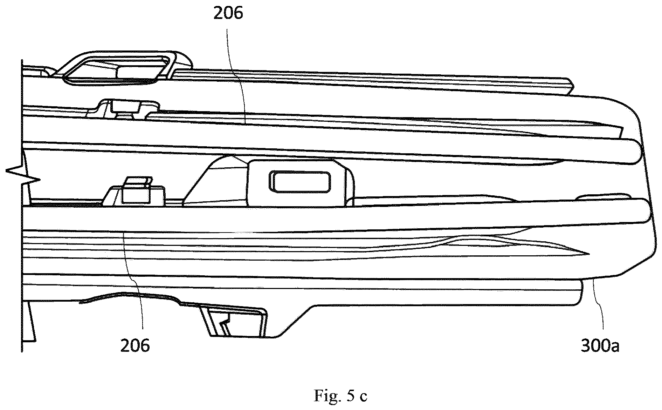

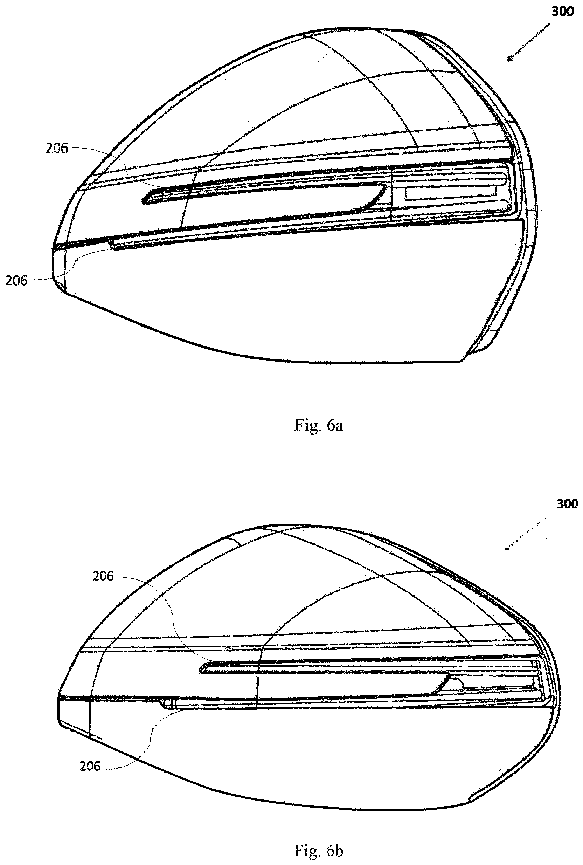

Further, the lamp 200 may be placed on at least one of an outside-rear view mirror 300 (as shown in Figs. 5a-c and Figs. 6a-b), a side of the vehicle, a front of the vehicle and a back of the vehicle. In an embodiment, the lamp may be placed on a roof of the vehicle. Further, in another embodiment, a plurality of the lamps 200 may be placed together to form a bigger lamp unit. As shown in Fig. 5a, the first LED 204a and the second LED 204b connected to the light tube 206 may be placed on a base frame 300a of the outside-rear view mirror 300 of the vehicle. Figs. 5b-c show enlarged view of a portion of the Fig. 5a. Further, Figs. 6a-b shows a left-hand side and a right-hand side outside-rear view mirror 300 for the vehicle, respectively.

Therefore, the present disclosure solves the challenge of placing the lamp in the limited space by reducing the number of light tubes. In addition, the present disclosure has provided a cost-effective lamp by reducing the number of light tubes.

Although the subject matter of the present disclosure has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims, i.e. the features disclosed in the foregoing description, the claims, and the drawings may be essential, both individually and in any combination, for accomplishing the present disclosure in its various embodiments. The embodiments shown herein are only examples of the present disclosure and must therefore not be understood as being restrictive. Alternative embodiments considered by the skilled person are equally covered by the scope of protection of the present disclosure.

### List of Reference

100 Lamp (Existing art)
100' Outside-rear view mirror (Existing art)
102 Control system (Existing art)
104a First LED (Existing art)
104b Second LED (Existing art)
106a First light pipe (Existing art)
106b Second light pipe (Existing art)
200 Lamp
202 Control system
204a First LED
204b Second LED
206 Light tube
206a First portion
206b Second portion
300 Outside-rear view mirror

## Claims

1. A lamp (200) for a vehicle, the lamp (200) comprising:
a first LED (204a) configured to emit a first color light;
a second LED (204b) configured to emit a second color light, wherein the second color light is different from the first color light;
a light tube (206) connected to the first LED (204a) and the second LED (204b), wherein the light tube (206) is configured to receive light from at least one of the first LED (204a) and the second LED (204b); and
a control system (202) configured to activate any one of the first LED (204a) and the second LED (204b) to illuminate the light tube.

2. The lamp (200) for the vehicle according to claim 1, wherein the control system (202) activates the first LED (202a) in an event of receiving a switching-on input from a side-turn lever of the vehicle.

3. The lamp (200) for the vehicle according to claim 1, wherein the control system (202) activates the second LED (202b) in an event of receiving a switching-on input from an autonomous driving system of the vehicle.

4. The lamp (200) for the vehicle according to claim 1, wherein the control system (202) activates the first LED (204a) in an event of receiving a switching-on input from a side-turn lever and an autonomous driving system of the vehicle.

5. The lamp (200) for the vehicle according to claim 1, wherein the control system (202) activates the second LED (204b) in an event of receiving a switching-on input from a side-turn lever and an autonomous driving system of the vehicle.

6. The lamp (200) for the vehicle according to claim 1, wherein the light tube (206) has a first portion (206a) and a second portion (206b), wherein the first portion (206a) is configured to receive the light from the first LED (202a) and the second LED (202b) in upstream of the second portion (206b).

7. The lamp (200) for the vehicle according to claim 6, wherein the first portion (206a) and the second portion (206b) have different outcoupling optics.

8. A lamp (200) for a vehicle, the lamp (200) comprising:
a first LED (204a) configured to emit a first color light;
a second LED (204b) configured to emit a second color light, wherein the second color light is different from the first color light;
a light tube (206) connected to the first LED (204a) and the second LED (204b), wherein the light tube (206) is configured to receive light from at least one of the first LED (204a) and the second LED (204b); and
a control system (202) configured to activate both the first LED (204a) and the second LED (204b) to illuminate the light tube (206) with a third color light.

9. The lamp (200) for the vehicle according to claim 8, wherein the third color light is different from the first color light and the second color light.

10. The lamp (200) for the vehicle according to claim 8, wherein the control system (202) activates the first LED (204a) and the second LED (204b) in an event of receiving a switching-on input from a side-turn lever and an autonomous driving system of the vehicle.

11. The lamp (200) for the vehicle according to claim 8, wherein the light tube (206) has a first portion (206a) and a second portion (206b), wherein the first portion (206a) is configured to receive the light from the first LED (202a) and the second LED (202b) in upstream of the second portion (206b).

12. The lamp (200) for the vehicle according to claim 8, wherein the first portion (206a) and the second portion (206b) have different outcoupling optics.

13. An outside-rear view mirror (300) of a vehicle comprising the lamp according to any of the claims 1-12.
